# EUROPÄISCHE PATENTANMELDUNG

(11) **EP 2 192 674 A1**
(43) Veröffentlichungstag der Anmeldung: **02.06.2010**
(21) Anmeldenummer: 08020714.5
(22) Anmeldetag: 28.11.2008
(51) Int. Cl.: H02K 15/03

(54) **Verfahren zum Aufbringen von Magneten**

(71) Anmelder: ThyssenKrupp Elevator AG, 40211 Düsseldorf (DE)
(72) Erfinder: Böpple, Stefan, 70794 Filderstadt (DE); Hannusch, Thomas, 70563 Stuttgart (DE)
(74) Vertreter: Deissler, K. Michael

(57) **Zusammenfassung**

Die vorliegende Erfindung betrifft ein Verfahren zum Aufbringen mindestens eines Magneten (26), eine Haltevorrichtung (10) für ein solches Verfahren und eine Anordnung mit einer Anzahl an Haltevorrichtungen (10). Das Verfahren dient zum Aufbringen mindestens eines Magneten (26) auf eine Oberfläche eines Bauteils aus einem magnetischen Werkstoff z.B. eines Rotorkörpers, wobei der mindestens eine Magnet (26), der in der Haltevorrichtung (10) mit einer Haltekraft gehalten ist, an die Oberfläche des Bauteils herangefahren wird, wobei eine der Haltekraft entgegengesetzte Anziehkraft auf den mindestens einen Magneten (26) ausgeübt wird, die im wesentlichen auf das Bauteil gerichtet ist, so dass der Magnet (26) sobald dieser (26) sich durch das Heranfahren in einem gewissen Abstand zu der Oberfläche befindet, in dem die Anziehkraft die Haltekraft übersteigt, auf die Oberfläche des Bauteils übergeht.

## Beschreibung

Die Erfindung betrifft ein Verfahren und eine Haltevorrichtung zum Aufbringen von mindestens einem Magneten auf eine Oberfläche eines Bauteils aus einem magnetischen Werkstoff. Weiterhin betrifft die Erfindung eine Anordnung mit einer Anzahl solcher Haltevorrichtungen.

Das erfindungsgemäße Verfahren und die entsprechende Vorrichtung werden insbesondere zur Bestückung von Rotoren mit Permanentmagneten für Elektromotoren, insbesondere für Elektromotoren für Aufzüge, bereitgestellt.

Für Aufzugsantriebe werden Motoren verwendet, die Rotoren aufweisen, die mit Permanentmagneten bestückt sind. Dabei können die Rotoren als Innenläufer mit an der Außenseite angebrachten Permanentmagneten oder als Außenläufer mit an der Innenseite angebrachten Permanentmagneten ausgebildet sein. Um den Rotor mit Permanentmagneten zu bestücken, ist es bekannt, die Magnete mit der Hand auf die Oberfläche des Rotors aufzubringen, was jedoch einen verhältnismäßig großen Aufwand darstellt. Aus diesem Grunde werden vermehrt Verfahren und Vorrichtungen eingesetzt, die ein automatisiertes Aufbringen der Magnete ermöglichen.

Aus der Druckschrift EP 1 826 889 A1 sind ein Verfahren und eine Haltevorrichtung zum Anbringen von Magneten auf ein Bauteil bekannt. Bei dem Verfahren wird mindestens ein Magnet auf eine Oberfläche des Bauteils aufgebracht, wobei der Magnet in unmittelbarer Nähe des Bauteils in der Haltevorrichtung durch eine mittels eines Halteelements wirkende Haltekraft gehalten wird. Bei dem Verfahren wird der Magnet zunächst zu dem Bauteil positioniert und dann durch Deaktivieren des Halteelements die wirkende Haltekraft reduziert, so dass der Magnet auf die Oberfläche des Bauteils übergeht.

Die Druckschrift US 2005/246886 A1 beschreibt ein Verfahren zum Positionieren und Befestigen von Magneten auf einem magnetischen Element eines Motors. Hierbei wird ein aufzubringender Magnet in einer Haltevorrichtung gehalten und zu dem magnetischen Element positioniert. Dabei wird der Magnet in der Haltevorrichtung durch eine anziehende Kraft gehalten. Durch Verringern dieser anziehenden Kraft und/oder durch Erhöhen einer Kraft, die den Magneten zu dem magnetischen Element zieht, wird ein Übergang des Magneten auf das magnetische Element bewirkt.

Aus der Druckschrift US-A-4 748 738 ist ein Verfahren zum Positionieren eines Paars Magnete auf einer Oberfläche eines eisenhaltigen Polstücks in einer vorbestimmten räumlichen Beziehung bekannt. Bei dem Verfahren werden die Magnete zunächst mit einer Haltekraft in einer Position gehalten. Anschließend wird bewirkt, dass die Magnete auf die Oberfläche des Polstücks zu ihrer endgültigen Position übergehen. Dies wird dadurch erreicht, dass die Magnete mit Schiebern aus Schlitzen geschoben werden.

Ein Verfahren zum Anbringen eines Permanentmagneten mit dessen Vorderseite an einem Träger ist in der Druckschrift DE 10 2004 039 807 A1 beschrieben. Bei diesem wird der Permanentmagnet mit einer ersten Kraft an dem Träger gehalten. Dabei ist der Permanentmagnet derart in einen Halter eingesetzt, dass die Rückseite des Permanentmagneten von dem Halter abgestützt ist und dessen Vorderseite gegenüber dem Halter vorsteht. Anschließend wird eine zweite Kraft auf den Permanentmagneten nach hinten ausgeübt, die gleich wie oder größer als die erste Kraft ist. Daraufhin wird der Halter an den Träger herangeführt, bis die Vorderseite des Permanentmagneten an dem Träger anliegt. Dann wird die zweite Kraft verringert, so dass diese geringer als die erste Kraft ist. Abschließend wird der Halter zurückgezogen.

Bei den bekannten Verfahren ist es notwendig, zusätzliche Elemente, wie bspw. Schieber, zu verwenden oder durch zusätzliche Steuerungsmaßnahmen wirkende Kräfte zu verändern.

Das vorgestellte Verfahren dient zum Aufbringen mindestens eines Magneten auf eine Oberfläche eines Bauteils aus einem magnetischen Werkstoff. Dabei wird der mindestens eine Magnet in einer Haltevorrichtung mit einer Haltekraft gehalten und an die Oberfläche des Bauteils herangefahren, wobei eine der Haltekraft entgegengesetzte Anziehkraft auf den mindestens einen Magnet ausgeübt wird, die im wesentlichen auf das Bauteil gerichtet ist, so dass der Magnet, sobald dieser sich durch das Heranfahren in einem gewissen Abstand zu der Oberfläche befindet, in dem die Anziehkraft die Haltekraft übersteigt, auf die Oberfläche des Bauteils übergeht.

Typischerweise wird der Magnet, in der Regel ein Permanentmagnet, durch magnetische Kraft in der Haltevorrichtung gehalten. Diese magnetische Kraft stellt die Haltekraft dar. Zusätzlich übt ebenfalls durch Magnetkraft das Bauteil aus einem magnetischen Werkstoff eine Anziehkraft auf den Magneten aus. Wird nunmehr der Magnet mit der Haltevorrichtung an das Bauteil herangeführt, verringert sich der Abstand zwischen Bauteil und Magnet stetig und entsprechend erhöht sich die Anziehkraft zwischen dem Magneten und dem Bauteil. Das Heranführen erfolgt dabei regelmäßig in einer kontinuierlichen Bewegung. Bei einem gewissen, vorab einstellbaren Abstand übersteigt die Anziehkraft auf den Magneten die Haltekraft und dieser geht auf die Oberfläche über. Bei diesem Übergang "fliegt" der Magnet "frei über" und kann sich in der richtigen Position und Ausrichtung auf der Oberfläche "finden". Im Rahmen dieses Übergangs kann der Magnet in einem gewissen Maß geführt werden. Dies kann durch entsprechende Führungseinrichtungen an der Haltevorrichtung, wie bspw. Führungsstifte und Führungstaschen, erreicht werden.

Nach Übergang des Magneten und auch während des Übergangs bleibt in der Regel die Bewegung der Haltevorrichtung zum Ausführen des Heranführens aufrechterhalten. Es kann somit eine kontinuierliche Bewegung der Haltevorrichtung hin zu der Oberfläche des Bauteils gerichtet erfolgen, in deren Verlauf der Übergang des mindestens einen Magneten auf die Oberfläche des Bauteils erfolgt.

Es sind keine zusätzlichen Mittel zur Durchführung des Verfahrens notwendig. Auch ist es nicht erforderlich, wirkende Kräfte direkt und gesteuert zu variieren. Lediglich durch Verändern des Abstands zwischen Bauteiloberfläche und Magnet wird erreicht, dass die Anziehkraft die Haltekraft übersteigt und somit ein freier Übergang erfolgt.

In Ausgestaltung des Verfahrens ist eine der Oberfläche des Bauteils zugewandte Seite des mindestens einen Magneten zumindest teilweise mit einem Klebstoff versehen. Das Auftragen des Klebstoffs kann dabei in einem weiteren vorab durchgeführten Arbeitsschritt, ggf. automatisiert, durchgeführt werden.

Bei der Wahl des Klebstoffs, der auch ein Zweikomponentenklebstoff sein kann, ist darauf zu achten, dass dieser in einem großen Temperaturbereich funktionsfähig sein muss. Beim Auftragen des Klebstoffs sollte außerdem berücksichtigt werden, dass keine Lufteinschlüsse erfolgen. Eine weitere Wirkung des Klebstoffs besteht darin, dass dieser den Aufprall des Magneten auf die Oberfläche des Bauteils dämpft. Der Klebstoff wirkt somit auch als Puffer.

Der Klebstoff gewährleistet nach Aushärten den sicheren Halt des Magneten auf der Oberfläche. Dies ist insbesondere von Bedeutung, wenn Magnete dicht nebeneinander aufgebracht werden, da anziehende und abstoßende Kräfte zwischen den einzelnen Magneten ein Verschieben der Magnete verursachen können. Auf Rotoren sind beispielsweise mehrere Reihen von nebeneinanderliegenden Magneten vorgesehen, die untereinander Kräfte ausüben.

In einer Ausführung wird die Haltevorrichtung nach Übergang des Magneten auf die Oberfläche weiter an diese herangeführt, so dass der mindestens eine Magnet mit einer regelmäßig vorab bestimmbaren Druckkraft an die Oberfläche des Bauteils angedrückt wird. Dies bedeutet, dass die Haltevorrichtung bzw. deren bewegliche Teile kontinuierlich zu der Oberfläche hin bewegt werden kann bzw. können. Bevor der Magnet die Oberfläche berührt, übersteigt die Anziehkraft die Haltekraft und der Magnet geht über. Diese Übergangsbewegung kann in einem gewissen Maße geführt werden. Nach Übergang des Magneten wird die Haltevorrichtung weiter bewegt und berührt nach einer gewissen Zeit wieder den Magneten, der auch in Kontakt mit der Oberfläche des Bauteils steht. Dann kann mit der Haltevorrichtung der Magnet an die Oberfläche gedrückt werden. Dies kann bspw. dazu beitragen, den Klebstoff zu verteilen. Diese Andrücken erfolgt in der Regel so lange, bspw. 90 Sekunden, mit einer vordefinierten Andrück- bzw. Anpresskraft, bis der Klebstoff ausgehärtet ist.

In Ausgestaltung wird nach Übergang des mindestens einen Magneten eine Relativbewegung des Magneten zu der Oberfläche des Bauteils, die im wesentlichen senkrecht zu der Richtung des Heranführens gerichtet ist, bewirkt. Diese Relativbewegung erfolgt somit nach Übergang des Magneten auf die Oberfläche und bewirkt ein korrektes Positionieren des Magneten auf der Oberfläche. So kann im Rahmen dieser Bewegung der Magnet an einen anderen Magneten herangeführt werden, so dass diese sich sogar berühren. Ein solches Positionieren wäre bei einem freien Übergang kaum zu bewerkstelligen.

Nach dem Positionieren kann dann das Andrücken des Magneten an die Oberfläche erfolgen. In diesem Fall wird also zunächst der Magnet an die Oberfläche herangeführt und dann nach Übergang des Magneten dieser richtig positioniert und anschließend angedrückt. Das Positionieren des Magneten bedeutet ein Verschieben des Magneten auf der Oberfläche, wodurch ebenfalls der Klebstoff verteilt wird. Während des Positionierens wird der Magnet typischerweise in einer Führungseinrichtung der Haltevorrichtung gerichtet bzw. geführt. Wird bspw. die Haltevorrichtung bzw. der bewegliche Teil der Haltevorrichtung mit einem Impuls von 9 bar beschleunigt kann das Andrücken ebenfalls mit 9 bar beaufschlagt werden.

Die Relativbewegung kann durch Bewegen des Bauteils bewirkt werden. In diesem Fall kann die Haltevorrichtung eine kontinuierliche Bewegung ausführen, die nach Übergang des Magneten durch eine Bewegung des Bauteils senkrecht zu der Bewegung der Haltevorrichtung überlagert wird. Im Rahmen dieser kontinuierlichen Bewegung wird zunächst der Magnet an die Oberfläche bis zu dessen Übergang herangeführt. Nach dessen Übergang wird die Haltevorrichtung weiter bewegt, in diesem Zeitraum erfolgt durch die überlagerte Bewegung des Bauteils das Positionieren. Anschließend drückt die Haltevorrichtung den Magneten gegen die Oberfläche. Die Bewegung der Haltevorrichtung erfolgt dabei in einem Arbeitshub.

Alternativ und/oder ergänzend kann die Relativbewegung durch Bewegen der Haltevorrichtung bewirkt werden.

Es kann vorgesehen sein, dass eine Anzahl von Magneten, die in einer Reihe angeordnet sind, in einem Arbeitsgang auf die Oberfläche des Bauteils aufgebracht wird. Dies ist bspw. dann von Bedeutung, wenn ein Rotor eines Elektromotors mit Magneten bestückt wird. Hierbei werden in einer Reihe von Arbeitsgängen jeweils eine Reihe von Magneten auf die Oberfläche des Rotors angebracht. So werden übereinanderliegende Reihen von Magneten auf den Rotor aufgebracht.

Es wird weiterhin eine Haltevorrichtung zum Aufbringen von mindestens einem Magneten beschrieben, die insbesondere zur Durchführung eines vorstehend beschriebenen Verfahrens geeignet ist. Die Haltevorrichtung umfasst einen in einem Zylinderraum bewegbaren Kolben, an dessen vorderem Ende eine Aufnahme zum Halten eines Magneten vorgesehen ist, wobei diese Aufnahme zumindest teilweise aus einem magnetischen Material gefertigt ist. An dieser Aufnahme kann die Führungseinrichtung zum Führen des Magneten während des Übergangs und auch zum Halten des Magneten während des Positionierens vorgesehen sein. Der Zylinder wird bspw. pneumatisch betrieben.

Durch Wahl unterschiedlicher Materialien, insbesondere von magnetischen und nicht magnetischen Materialien bzw. Werkstoffen, kann die Haltekraft auf den in der Aufnahme befindlichen Magneten genau vorgegeben werden.

So kann die Aufnahme aus einem Kern aus einem magnetischen Material, der von einem Rahmen aus einem nicht magnetischen Material umgeben ist, bestehen.

In Ausgestaltung verfügt die Haltevorrichtung im Bereich der Aufnahme über eine Führung. Diese Führung wirkt mit Führungen benachbarter Haltevorrichtungen zusammen, so dass gewährleistet werden kann, dass sich mehrere Haltevorrichtungen synchron bewegen.

Die Führung kann mindestens einen Bolzen und mindestens einen Schaft, die einander gegenüberliegen, umfassen.

In Ausgestaltung ist bei der Haltevorrichtung ein Sensor zum Erfassen der Lage des Hubkolbens vorgesehen. Insbesondere ist eine Endlageerkennung zur Gewährleistung der Funktionsfähigkeit der Haltevorrichtung von Vorteil. Dies kann auch über eine rein mechanische Rückmeldung erfolgen.

Es wird weiterhin eine Anordnung mit einer Anzahl an Haltevorrichtungen der vorstehend beschriebenen Art vorgestellt, die zum Aufbringen einer Anzahl an Magneten auf eine Oberfläche eines Bauteils aus einem magnetischen Werkstoff dient. Dabei trägt jede Haltevorrichtung einen Magneten, so dass in einem Arbeitsschritt eine entsprechende Anzahl an Magneten aufgebracht werden kann. Bei der Ansteuerung der einzelnen Haltevorrichtungen sollte darauf geachtet werden, dass die Zuleitungen zu diesen gleich lang sind, so dass diese sich synchron bewegen. Dies kann auch durch Führungen an den Haltevorrichtungen, die zusammenwirken, unterstützt werden.

Es kann vorgesehen sein, dass die Haltevorrichtungen auf einem Kreis liegend zueinander angeordnet sind. Dies bedeutet, dass die Haltevorrichtungen kreis- bzw. ringförmig angeordnet sind, so dass ein entsprechend geformtes Bauteil, bspw. ein zylinderförmiges Bauteil, innen oder außen mit Magneten bestückt werden kann.

Das vorgestellte Verfahren sowie die Haltevorrichtung und die Anordnung ermöglichen daher, zumindest in den beschriebenen Ausführungen, ein sicheres, schnelles und kostengünstiges Aufbringen von Magneten auf eine Oberfläche eines Bauteils aus einem magnetischen Werkstoff. Ein weiterer Vorteil besteht darin, dass das Verfahren automatisiert und roboterunterstützt durchgeführt werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt eine Ausführungsform der vorgestellten Haltevorrichtung in einer perspektivischen Darstellung.
- Figur 2: zeigt in einer schematischen Darstellung eine Aufnahme einer Haltevorrichtung mit einem Magneten.
- Figur 3: zeigt in einer Seitenansicht eine Ausführung der Haltevorrichtung.
- Figur 4: zeigt die Haltevorrichtung aus Figur 3 in einer um 90° gedrehten Position.
- Figur 5: zeigt in einer Draufsicht eine Ausführung einer Anordnung mit einer Anzahl an Haltevorrichtungen.
- Figur 6: zeigt die Anordnung aus Figur 5 in einer perspektivischen Darstellung.

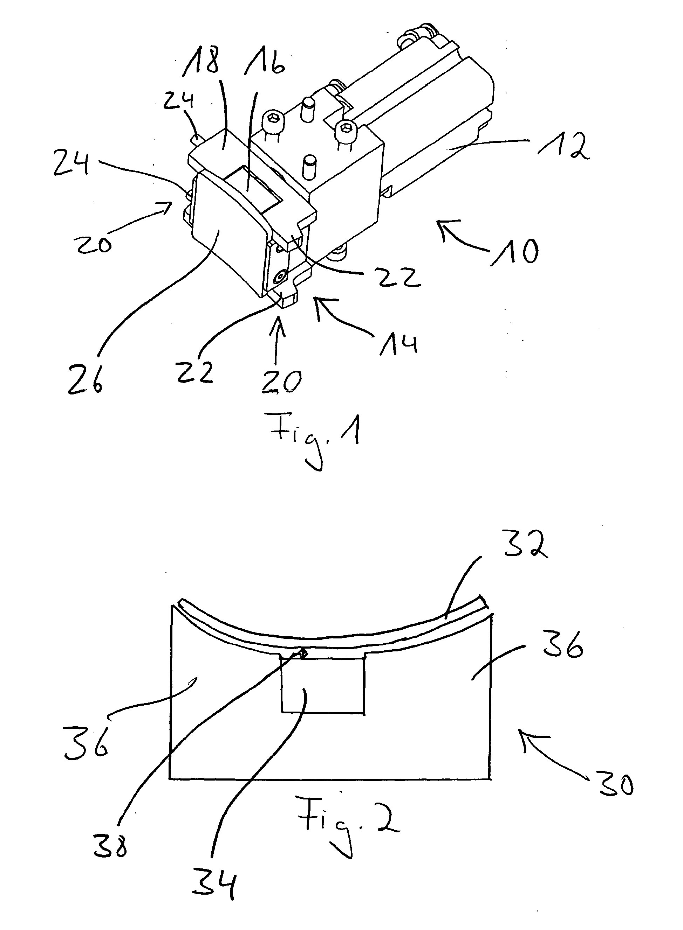

In Figur 1 ist in einer perspektivischen Ansicht eine Haltevorrichtung dargestellt, die insgesamt mit der Bezugsziffer 10 bezeichnet ist. Diese umfasst einen Zylinder 12, in dem ein in dieser Darstellung nicht erkennbarer Kolben bewegbar ist. Dieser Kolben stellt den bewegbaren Teil der Haltevorrichtung 10 dar. Weiterhin ist eine Aufnahme 14 zu erkennen, die einen Kern 16 aus einem magnetischen Material, bspw. einen Eisenkern, aufweist, der von einem Rahmen 18 aus einem nicht magnetischen Material umgeben ist.

Seitlich ist eine Führung 20 vorgesehen, die gegenüberliegende Schafte 22 und Bolzen 24 umfasst. Diese Elemente der Führung 20 wirken mit Führungen benachbarter Haltevorrichtungen zusammen, um sicherzustellen, dass die Kolben der Haltevorrichtungen sich synchron bewegen.

Die Aufnahme 14 trägt einen Magneten 26, der durch die Haltekraft des Eisenkerns 16 gehalten ist. Dieser Magnet 26 wird durch Betätigen des Kolbens der Haltevorrichtung 10 an eine zu bestückende Oberfläche herangefahren, bis eine hin zu der Oberfläche gerichtete Anziehkraft die Haltekraft des Eisenkerns 16 übersteigt und daher der Magnet 26 übergeht. Die Bewegung des Kolbens kann während des Übergangs und nach diesem kontinuierlich weitergeführt werden.

Eine weitere Aufnahme ist in Figur 2 mit der Bezugsziffer 30 versehen dargestellt. Diese trägt bzw. hält ebenfalls einen Magneten 32.

Wiederum ist ein Kern 34 aus einem magnetischen Material vorgesehen, der aus einem Rahmen 36 aus einem nicht magnetischen Material gefertigt ist. Das Verhältnis zwischen Rahmen 36 und Kern 34 bestimmt die Haltekraft der Aufnahme 30.

Weiterhin zeigt die Darstellung, dass der Kern 34 etwas gegenüber dem Rahmen zurückversetzt ist, so dass ein Spalt 38 zwischen dem Magneten 32 und dem Kern 34 besteht. Dies bedeutet, dass beim Andrücken des Magneten 32 an eine Oberfläche nur außen eine Kraft auf den Magneten 32 wirkt, wodurch die Gefahr des Brechens des Magneten 32 gemindert wird.

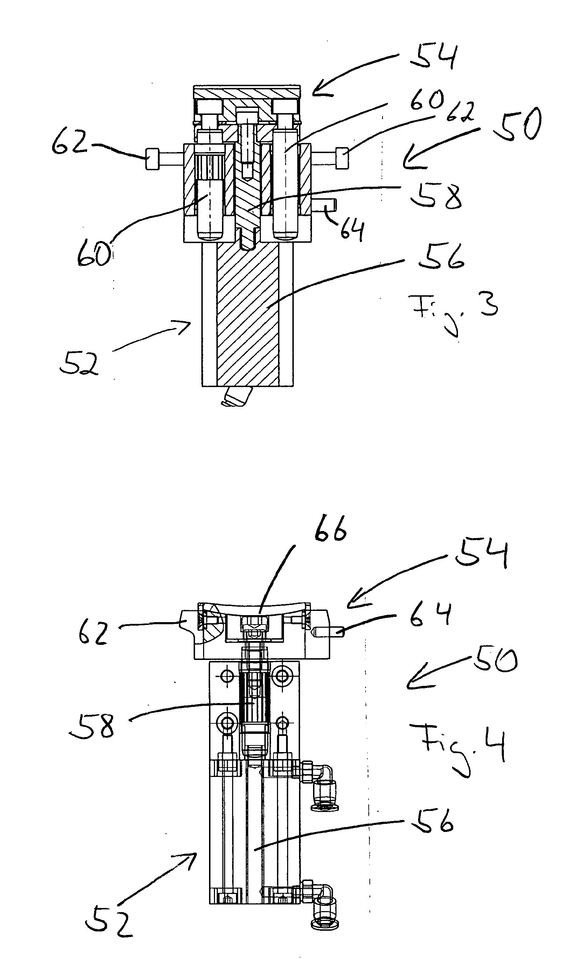

In Figur 3 ist eine weitere Haltevorrichtung 50 dargestellt. Diese weist einen Zylinder 52 und eine Aufnahme 54 auf. Der Zylinder 52 weist einen Zylinderraum 56 mit einem darin geführten Kolben 58 auf, dessen vorderes Ende die Aufnahme 54 trägt. Zur Führung des Kolbens 58 sind weiterhin Führungsbolzen 60 vorgesehen.

Figur 4 zeigt die Haltevorrichtung 50 um 90° gedreht. Die Darstellung zeigt den Zylinder 52, die Aufnahme 54, die einen Magneten 66 trägt, den Zylinderkörper 56, den Kolben 58, die Befestigungsschraube 62 und die Verstiftung 64.

Zur Synchronisierung des Kolbens 58 mit benachbarten Haltevorrichtungen sind Schafte und ein Bolzen vorgesehen.

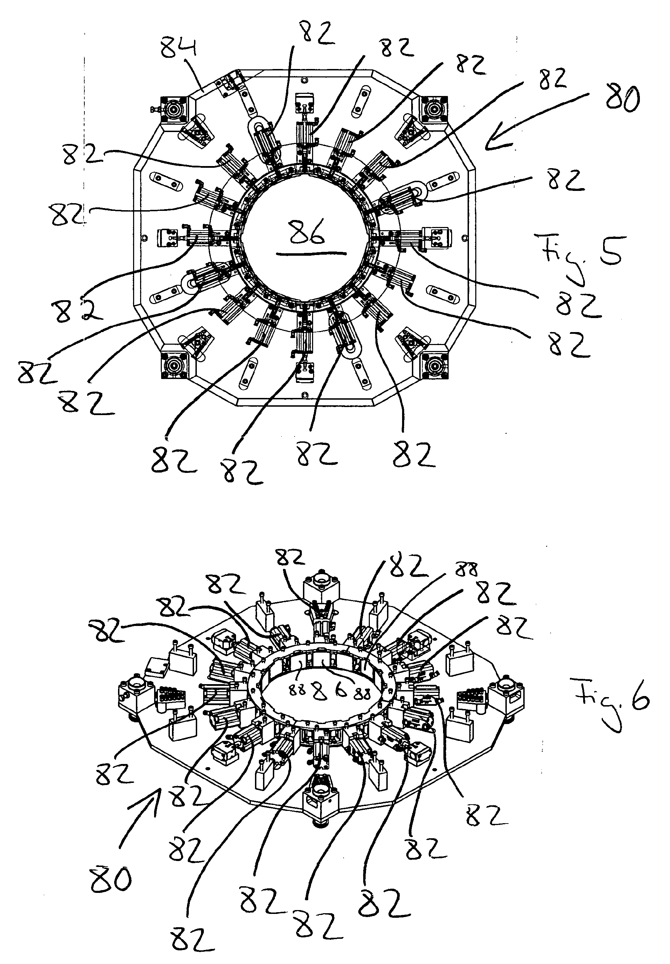

In Figur 5 ist in einer Draufsicht eine Anordnung zur Durchführung des beschriebenen Verfahrens dargestellt, die insgesamt mit der Bezugsziffer 80 bezeichnet ist. Die Anordnung 80 umfasst eine Anzahl von Haltevorrichtungen 82, die kreisförmig angeordnet sind.

Die Haltevorrichtungen 82 sind im gleichen Abstand zueinander sicher auf einer Grundplatte 84 befestigt. Zentral ist eine Öffnung 86 vorgesehen, durch die ein zu bestückender Rotor bewegt werden kann.

In einer perspektivischen Ansicht ist die Anordnung aus Figur 5 in Figur 6 dargestellt. Wiederum sind die auf der Grundplatte 84 angebrachten Haltevorrichtungen 82 gezeigt, die auf eine Öffnung 86 hin gerichtet sind. Weiterhin sind aufzubringende Magnete 88 dargestellt.

## Patentansprüche

1. Verfahren zum Aufbringen mindestens eines Magneten (26, 32, 66, 88) auf eine Oberfläche eines Bauteils aus einem magnetischen Werkstoff, bei dem der mindestens eine Magnet (26, 32, 66, 88) in einer Haltevorrichtung (10, 50, 82) mit einer Haltekraft gehalten an die Oberfläche des Bauteils herangefahren wird, wobei eine der Haltekraft entgegengesetzte Anziehkraft auf den mindestens einen Magnet (26, 32, 66, 88) ausgeübt wird, die im wesentlichen auf das Bauteil gerichtet ist, so dass der Magnet (26, 32, 66, 88), sobald dieser sich durch das Heranfahren in einem gewissen Abstand zu der Oberfläche befindet, in dem die Anziehkraft die Haltekraft übersteigt, auf die Oberfläche des Bauteils übergeht.

2. Verfahren nach Anspruch 1, bei dem eine der Oberfläche des Bauteils zugewandte Seite des mindestens einen Magneten (26, 32, 66, 88) zumindest teilweise mit einem Klebstoff versehen ist.

3. Verfahren nach Anspruch 1 oder 2, bei dem die Haltevorrichtung (10, 50, 82) nach Übergang des Magneten (26, 32, 66, 88) auf die Oberfläche weiter an diese herangeführt wird, so dass der mindestens eine Magnet (26, 32, 66, 88) mit einer Druckkraft an die Oberfläche des Bauteils angedrückt wird.

4. Verfahren nach einem der Ansprüche 1 bis 3, bei dem nach Übergang des mindestens einen Magneten (26, 32, 66, 88) eine Relativbewegung des Magneten (26, 32, 66, 88) zu der Oberfläche des Bauteils, die im wesentlichen senkrecht zu der Richtung des Heranführens gerichtet ist, bewirkt wird.

5. Verfahren nach Anspruch 4, bei dem die Relativbewegung durch Bewegen des Bauteils bewirkt wird.

6. Verfahren nach Anspruch 4, bei dem die Relativbewegung durch Bewegen der Haltevorrichtung (10, 50, 82) bewirkt wird.

7. Verfahren nach einem der Ansprüche 1 bis 6, bei dem eine Anzahl von Magneten (26, 32, 66, 88), die in einer Reihe angeordnet sind, in einem Arbeitsgang auf die Oberfläche des Bauteils aufgebracht wird.

8. Verfahren nach einem der Ansprüche 1 bis 7, bei dem ein Rotor eines Elektromotors mit Magneten (26, 32, 66, 88) bestückt wird.

9. Haltevorrichtung zum Aufbringen von mindestens einem Magneten (26, 32, 66, 88), insbesondere zur Durchführung eines Verfahrens nach einem der Ansprüche 1 bis 8, der einen in einem Zylinderraum (56) bewegbaren Kolben (58) aufweist, an dessen vorderem Ende eine Aufnahme (14, 30, 54) zum Halten eines Magneten (26, 32, 66, 88) vorgesehen ist, wobei diese Aufnahme (14, 30, 54) zumindest teilweise aus einem magnetischen Material gefertigt ist.

10. Haltevorrichtung nach Anspruch 9, bei dem die Aufnahme (14, 30, 54) aus einem Kern (16, 34) aus einem magnetischen Material besteht, der von einem Rahmen (18, 36) aus einem nicht magnetischen Material umgeben ist.

11. Haltevorrichtung nach Anspruch 9 oder 10, die im Bereich der Aufnahme (14, 30, 54) über eine Führung (20) verfügt.

12. Haltevorrichtung nach Anspruch 11, bei der die Führung (20) mindestens einen Bolzen (24, 64) und mindestens einen Schaft (22, 62), die einander gegenüberliegen, umfasst.

13. Haltevorrichtung nach einem der Ansprüche 9 bis 12, bei der ein Sensor zum Erfassen der Lage des Kolbens (58) vorgesehen ist.

14. Anordnung mit einer Anzahl an Haltevorrichtungen (10, 50, 82) nach einem der Ansprüche 9 bis 13, zum Aufbringen einer Anzahl an Magneten (26, 32, 66, 88) auf eine Oberfläche eines Bauteils aus einem magnetischen Werkstoff.

15. Anordnung nach Anspruch 14, bei der die Haltevorrichtungen (10, 50, 82) auf einem Kreis liegend zueinander angeordnet sind.
